# EUROPEAN PATENT APPLICATION

(11) **EP 3 547 185 A2**
(43) Date of publication of application: **02.10.2019**
(21) Application number: 19164755.1
(22) Date of filing: 22.03.2019
(51) Int. Cl.: G06F 21/31, G06F 21/32

(54) **APPARATUS AND METHOD FOR POST-AUTHENTICATION USER VERIFICATION BASED ON USER INTERACTIONS**

(30) Priority: 26.03.2018 US 201815935646
(71) Applicant: Honeywell International Inc., Morris Plains, NJ New Jersey 07950 (US)
(72) Inventor: MCMURDIE, Kevin, Morris Plains, NJ New Jersey 07950 (US); GADHE, Ganesh P., Morris Plains, NJ New Jersey 07950 (US); SPINRAD, Mark, Morris Plains, NJ New Jersey 07950 (US); KNUTSON, Boyd, Morris Plains, NJ New Jersey 07950 (US); WOODS, Scott A., Morris Plains, NJ New Jersey 07950 (US)
(74) Representative: Houghton, Mark Phillip

(57) **Abstract**

A method includes obtaining (702) first data identifying first user interactions with one or more computing or networking resources during at least one first user session that is known to be valid. The method also includes generating (704) one or more profiles defining typical user interactions with the one or more resources based on the first data. The method further includes obtaining (708) second data identifying second user interactions with at least one of the one or more resources during a subsequent second user session. The method also includes determining (712) whether the second user session is valid based on the second data and at least one of the one or more profiles by comparing the second user interactions to the typical user interactions defined in the at least one profile. In addition, the method includes taking (714, 716) one or more actions in response to determining that the second user session is not valid.

## Description

### TECHNICAL FIELD

This disclosure generally relates to computing and network security. More specifically, this disclosure relates to an apparatus and method for post-authentication user verification based on user interactions.

### BACKGROUND

Numerous organizations have private computing networks that support some type of access controls or other cyber-security controls to limit access. This is necessary in protected environments such as industrial control systems, manufacturing plants or other facilities, hospitals or other healthcare facilities, and classified network areas. As a particular example, industrial processes are often managed using industrial process control and automation systems. Conventional control and automation systems routinely include a variety of networked devices, such as servers, workstations, switches, routers, firewalls, safety systems, proprietary real-time controllers, and industrial field devices. Often times, this equipment comes from a number of different vendors. In industrial environments, cyber-security is of increasing concern, and unaddressed security vulnerabilities in any of these components could be exploited by malicious actors to disrupt operations or cause unsafe conditions in an industrial facility.

Unfortunately, malicious actors continue to leverage new technologies to exploit weaknesses, and conventional cyber-security solutions (such as antivirus solutions and firewall solutions) often cannot keep pace with new threats. For example, conventional antivirus solutions can often only protect against threats already known and catalogued in their signature databases. As another example, conventional firewalls are often only as effective as their configurations and technology stacks enable them to be. As a result, it is becoming increasingly difficult for organizations to rely on conventional cyber-security solutions to protect their networks and systems from intrusions or other exploits.

### SUMMARY

This disclosure provides an apparatus and method for post-authentication user verification based on user interactions.

In a first embodiment, a method includes obtaining first data identifying first user interactions with one or more computing or networking resources during at least one first user session that is known to be valid. The method also includes generating one or more profiles defining typical user interactions with the one or more computing or networking resources based on the first data. The method further includes obtaining second data identifying second user interactions with at least one of the one or more computing or networking resources during a subsequent second user session. The method also includes determining whether the second user session is valid based on the second data and at least one of the one or more profiles by comparing the second user interactions to the typical user interactions defined in the at least one profile. In addition, the method includes taking one or more actions in response to determining that the second user session is not valid.

In a second embodiment, an apparatus includes at least one memory and at least one processing device. The at least one memory is configured to store first data identifying first user interactions with one or more computing or networking resources during at least one first user session that is known to be valid. The at least one memory is also configured to store second data identifying second user interactions with at least one of the one or more computing or networking resources during a subsequent second user session. The at least one processing device is configured to generate one or more profiles defining typical user interactions with the one or more computing or networking resources based on the first data. The at least one processing device is also configured to determine whether the second user session is valid based on the second data and at least one of the one or more profiles by comparing the second user interactions to the typical user interactions defined in the at least one profile. The at least one processing device is further configured to initiate one or more actions in response to determining that the second user session is not valid.

In a third embodiment, a non-transitory computer readable medium contains instructions that when executed cause at least one processor to obtain first data identifying first user interactions with one or more computing or networking resources during at least one first user session that is known to be valid. The medium also contains instructions that when executed cause the at least one processor to generate one or more profiles defining typical user interactions with the one or more computing or networking resources based on the first data. The medium further contains instructions that when executed cause the at least one processor to obtain second data identifying second user interactions with at least one of the one or more computing or networking resources during a subsequent second user session. The medium also contains instructions that when executed cause the at least one processor to determine whether the second user session is valid based on the second data and at least one of the one or more profiles by comparing the second user interactions to the typical user interactions defined in the at least one profile. In addition, the medium contains instructions that when executed cause the at least one processor to initiate one or more actions in response to determining that the second user session is not valid.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURES 2 and 3 illustrate example devices for post-authentication user verification based on user interactions according to this disclosure;
FIGURES 4 through 6 illustrate example types of user interaction data that could be collected and evaluated for post-authentication user verification according to this disclosure; and
FIGURE 7 illustrates an example method for post-authentication user verification based on user interactions according to this disclosure.

### DETAILED DESCRIPTION

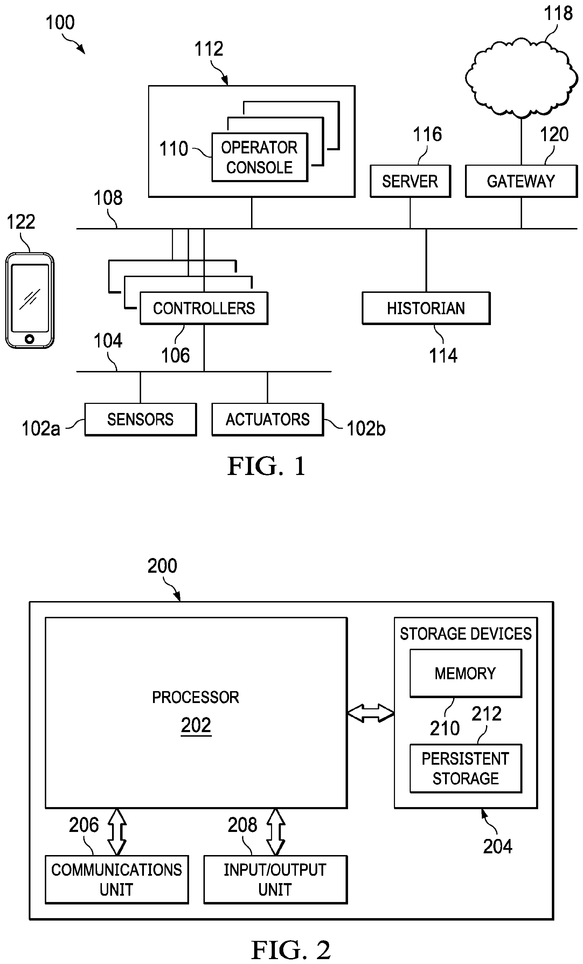

FIGURES 1 through 7, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

As noted above, numerous organizations have private computing networks that support some type of access controls or other cyber-security controls to limit access. Unfortunately, malicious actors continue to leverage new technologies to exploit weaknesses, and conventional cyber-security solutions (such as antivirus solutions and firewall solutions) often cannot keep pace with new threats. As a result, additional cyber-security solutions are needed to protect network infrastructures and confidential information. Moreover, it is becoming apparent that cyber-security cannot be achieved by implementing a single product or adhering to a single process. Rather, improved cyber-security can be achieved by assessing a system's unique technology infrastructure and requirements and by identifying proper solutions to mitigate threats associated with the system's technology stack and operations. Once implemented, security mitigations typically need to continue to be assessed against the current threat landscape in order to stay relevant.

This disclosure describes techniques for verifying whether active user sessions are valid user sessions, meaning users associated with the sessions are authorized (rather than actors leveraging authorized users' credentials). More specifically, these techniques analyze a user's interactions with a resource after the user has been authenticated (such as with a username and password) and collect metadata describing these interactions. The metadata can be collected during times when it is known that the correct user is authorized or authenticated to use the resource (which can be referred to as an "onboarding" period). The metadata is used to build a profile of the user's interactions with the resource. Later, the same type of metadata can be collected during a subsequent session, and a determination can be made whether the user interactions that occur during the subsequent session are consistent with the profile. If not, this could be indicative that a malicious actor is using an authorized user's credentials in the subsequent session.

In this way, these techniques can raise awareness early if a user session does not appear to originate from or involve an expected user. This can help to mitigate early network compromises or prevent breaches from going unnoticed for long periods of time. These techniques could also be used to provide inputs to intrusion detection or prevention systems so that those systems can attempt to mitigate the network compromises. Note that the term "resource" here refers to any hardware, software, or other physical or virtual component of limited availability within a computing system or network. Also note that these techniques can be used along with any other suitable cybersecurity mechanisms (such as antivirus and firewall solutions) to help provide improved cybersecurity.

FIGURE 1 illustrates an example industrial process control and automation system 100 according to this disclosure. As shown in FIGURE 1, the system 100 includes various components that facilitate production or processing of at least one product or other material. For instance, the system 100 can be used to facilitate control over components in one or multiple industrial plants. Each plant represents one or more processing facilities (or one or more portions thereof), such as one or more manufacturing facilities for producing at least one product or other material. In general, each plant may implement one or more industrial processes and can individually or collectively be referred to as a process system. A process system generally represents any system or portion thereof configured to process one or more products or other materials in some manner.

In FIGURE 1, the system 100 includes one or more sensors 102a and one or more actuators 102b. The sensors 102a and actuators 102b represent components in a process system that may perform any of a wide variety of functions. For example, the sensors 102a could measure a wide variety of characteristics in the process system, such as pressure, temperature, or flow rate. Also, the actuators 102b could alter a wide variety of characteristics in the process system. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent at least one Ethernet network, electrical signal network (such as a HART network), pneumatic control signal network, or any other or additional type(s) of network(s).

The system 100 also includes various controllers 106. The controllers 106 can be used in the system 100 to perform various functions in order to control one or more industrial processes. For example, a first set of controllers 106 may use measurements from one or more sensors 102a to control the operation of one or more actuators 102b. A second set of controllers 106 could be used to optimize the control logic or other operations performed by the first set of controllers. A third set of controllers 106 could be used to perform additional functions. The controllers 106 can communicate via one or more networks 108 and associated switches, firewalls, and other components.

Each controller 106 includes any suitable structure for controlling one or more aspects of an industrial process. At least some of the controllers 106 could, for example, represent programmable logic controllers (PLCs), proportional-integral-derivative (PID) controllers, or multivariable controllers such as controllers implementing model predictive control (MPC) or other advanced predictive control (APC). As a particular example, each controller 106 could represent a computing device running a real-time operating system, a WINDOWS operating system, or other operating system.

Operator access to and interaction with the controllers 106 and other components of the system 100 can occur via various operator consoles 110. Each operator console 110 could be used to provide information to an operator and receive information from an operator. For example, each operator console 110 could provide information identifying a current state of an industrial process to the operator, such as values of various process variables and alarms associated with the industrial process. Each operator console 110 could also receive information affecting how the industrial process is controlled, such as by receiving setpoints or control modes for process variables controlled by the controllers 106 or other information that alters or affects how the controllers 106 control the industrial process. Each operator console 110 includes any suitable structure for displaying information to and interacting with an operator. For example, each operator console 110 could represent a computing device running a WINDOWS operating system or other operating system.

Multiple operator consoles 110 can be grouped together and used in one or more control rooms 112. Each control room 112 could include any number of operator consoles 110 in any suitable arrangement. In some embodiments, multiple control rooms 112 can be used to control an industrial plant, such as when each control room 112 contains operator consoles 110 used to manage a discrete part of the industrial plant.

The control and automation system 100 here also includes at least one historian 114 and one or more servers 116. The historian 114 represents a component that stores various information about the system 100. The historian 114 could, for instance, store information that is generated by the various controllers 106 during the control of one or more industrial processes. The historian 114 includes any suitable structure for storing and facilitating retrieval of information. Although shown as a single component here, the historian 114 could be located elsewhere in the system 100, or multiple historians could be distributed in different locations in the system 100.

Each server 116 denotes a computing device that executes applications for users of the operator consoles 110 or other applications. The applications could be used to support various functions for the operator consoles 110, the controllers 106, or other components of the system 100. Each server 116 could represent a computing device running a WINDOWS operating system or other operating system. Note that while shown as being local within the control and automation system 100, the functionality of the server 116 could be remote from the control and automation system 100. For instance, the functionality of the server 116 could be implemented in a computing cloud 118 or a remote server communicatively coupled to the control and automation system 100 via a gateway 120. It is also possible to implement common or different functions using the server 116 and the computing cloud 118 or remote server.

The system 100 may optionally include one or more mobile devices 122. The mobile devices 122 could be used to obtain information about one or more industrial processes or the system 100 and display the information to users. The mobile devices 122 could also be used to obtain input from the users altering how the industrial processes are controlled by the system 100. The mobile devices 122 could be used in any other suitable manner in or with the system 100. Any suitable type(s) of mobile devices 122 could be used in or with the system 100, such as smartphones, tablet computers, or laptop computers.

Industrial processes are typically implemented using large numbers of devices, such as pumps, valves, compressors, or other industrial equipment. Similarly, industrial process control and automation systems are typically implemented using large numbers of devices, such as the sensors 102a, actuators 102b, controllers 106, and other components in FIGURE 1. Various networks can be used to couple these devices together and transport information. As a result, numerous devices and networks could be subject to attacks where malicious actors attempt to gain access to network infrastructures, confidential information, or other resources.

One common type of attack occurs when a malicious actor logs into a device or system using an authorized user's credentials. Credentials are typically used to ensure that users are permitted to access computing or networking resources, and the use of credentials as a mechanism for authorization is ubiquitous. However, credential compromise remains one of the most prevalent tactics of malicious actors. As a result, the use of multi-factor authentication has been on the rise to augment credential authorization.

As described in more detail below, one or more components of a system can be used to detect whether an active user session that (allegedly) involves a specific user is consistent with user interactions expected for that user. For example, user profiles can be created for various users or groups of users in the system 100, such as profiles based on how a user or a group of users typically uses one or more operator consoles 110 or mobile devices 122 to interact with one or more applications or other resources. The user profiles can be stored, and a subsequent session that allegedly is performed by a particular user can be analyzed to determine whether the user interactions during the subsequent session are consistent with the user's profile(s).

If not, this could be indicative that a malicious actor is using the user's credentials in the subsequent session, and corrective action can occur. Examples of corrective action could include flagging, restricting, or terminating the subsequent session or generating an alarm or other notification for a system administrator or other personnel. Examples of corrective action could also include asking the user associated with the subsequent session for additional credentials (not previously provided during the subsequent session). Examples of corrective action could further include interacting with the user to verify the user's identity, such as by asking one or more questions and verifying whether the correct answer or answers are received. In addition, examples of corrective action could include asking the user to provide a physical security token or other multi-factor authentication solution. The additional authentication or verification helps to verify the user's identity during the subsequent session. Of course, any other or additional corrective action(s) could occur in response to determining that user interactions during a subsequent session are inconsistent with one or more profiles.

Effectively, this allows the system 100 to use data analytics to "learn" how a user or group of users typically interacts with a resource, and this can be used to identify errant or other unexpected patterns of resource usage that may suggest a user account has been compromised. This provides "post-authentication" user verification since it would occur after a user has already provided credentials, such as a username and password.

The functionality for recording user interactions, analyzing the user interactions to generate profiles, and comparing the profiles to subsequent user interactions could be implemented in any suitable manner in the system 100. For example, all of these functions could be performed locally within the system 100, such as when an operator console 110, mobile device 122, and/or server 116 performs these functions. As another example, data collection could occur within the system 100 to collect data associated with user interactions, and the data could be provided to the computing cloud 118 or remote server via the gateway 120 for analysis and profile generation. The computing cloud 118 or remote server could compare the generated profiles to subsequent user interactions, or the computing cloud 118 or remote server could provide the profiles to the operator console 110, mobile device 122, and/or server 116 for use in comparing the subsequent user interactions to the profiles. In general, the functions that are performed to provide post-authentication user verification based on user interactions could be implemented using any suitable device(s) in any suitable system(s).

Note that while often described as being user-specific, post-authentication user verification could be based on information associated with multiple users. For example, one or more profiles could be generated showing typical user interactions that may be expected for different types of users in a system. In an industrial setting, for instance, the different types of users could be associated with different responsibilities in the control and automation system 100. The different types of users could also be associated with their user roles in the system, such as end users, system administrators, and network administrators. Of course, any other or additional types of users could have profiles generated regarding their typical user interactions in a system.

Also, a single profile or multiple profiles could be generated based on specific types of interactions, and/or a single profile or multiple profiles could be generated based on a user or users' typical interactions with different computing or networking resources. For example, a user profile could relate to a single type of user interaction (such as interactions involving a keyboard or a mouse), where different user profiles can be generated for different types of interactions. Alternatively, a user profile could relate to multiple types of user interactions with one or more resources. As another example, users may have the ability to use different applications or other resources within a system to support different functions in the system. Different user profiles can be generated that identify typical user interactions with different resources, or a user profile could relate to multiple resources.

In general, any number of user interaction profiles having any suitable arrangement of data defining typical user interactions for one or more users could be supported. Whenever a subsequent user session is being analyzed, the appropriate data defining typical user interactions can be retrieved from one or more of the profiles and used to perform post-authentication user verification based on user interactions in the subsequent session.

Additional details regarding the collection of user interaction data, the analysis of that data, and the generation and use of user interaction profiles are provided below. Note that these details relate to specific implementations of devices that provide or support these functions, although other implementations of the devices could be used.

Although FIGURE 1 illustrates one example of an industrial process control and automation system 100, various changes may be made to FIGURE 1. For example, the system 100 could include any number of sensors, actuators, controllers, networks, operator consoles, control rooms, historians, servers, mobile devices, and other components. Also, the makeup and arrangement of the system 100 in FIGURE 1 are for illustration only. Components could be added, omitted, combined, further subdivided, or placed in any other suitable configuration according to particular needs. Further, particular functions have been described as being performed by particular components of the system 100. This is for illustration only. In general, control and automation systems are highly configurable and can be configured in any suitable manner according to particular needs. In addition, while FIGURE 1 illustrates one example operational environment where user interactions can be used for post-authentication user verification, this functionality can be used in any other suitable system (and that system need not relate to industrial process control and automation).

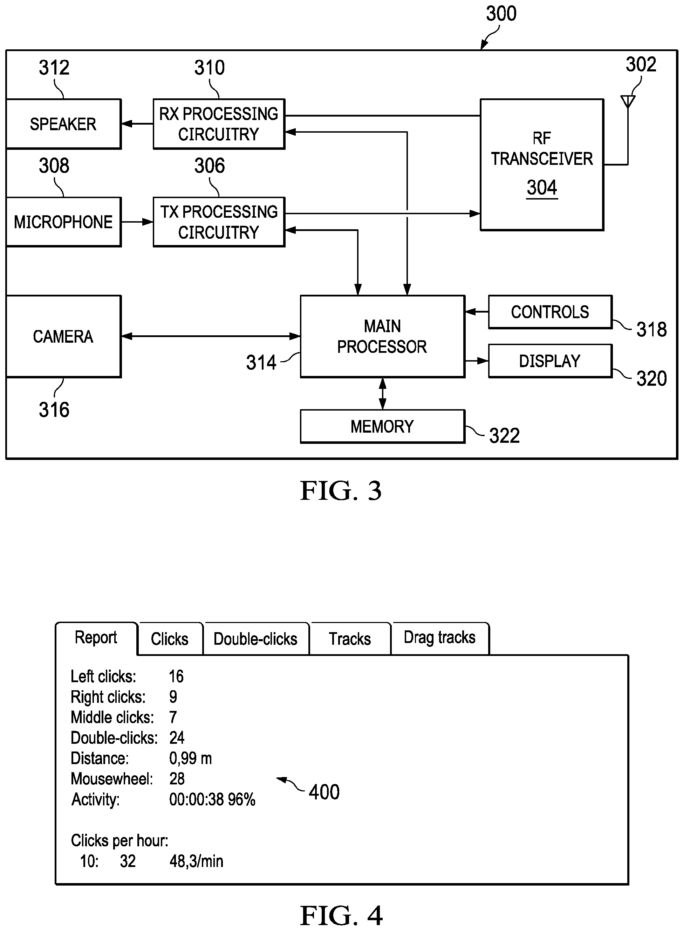

FIGURES 2 and 3 illustrate example devices for post-authentication user verification based on user interactions according to this disclosure. In particular, FIGURE 2 illustrates an example computing device 200, and FIGURE 3 illustrates an example mobile device 300. In some embodiments, the computing device 200 could denote an operator console 110, server 116, or remote server or device in the computing cloud 118, and the mobile device 300 could denote a mobile device 122. The computing device 200 could be used to collect user interaction data, analyze the user interaction data, generate user interaction profiles, and/or use user interaction profiles to identify potentially invalid sessions. The mobile device 300 could be used to perform one or more of these functions. For ease of explanation, the computing device 200 and the mobile device 300 are described as being used in the system 100 of FIGURE 1, although the devices 200 and 300 could be used in any other suitable system (whether or not related to industrial process control and automation).

As shown in FIGURE 2, the computing device 200 includes at least one processor 202, at least one storage device 204, at least one communications unit 206, and at least one input/output (I/O) unit 208. Each processor 202 can execute instructions, such as those that may be loaded into a memory 210. Each processor 202 denotes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) configured to store and facilitate retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read-only memory, hard drive, Flash memory, or optical disc.

The communications unit 206 supports communications with other systems or devices. For example, the communications unit 206 could include at least one network interface card or wireless transceiver facilitating communications over at least one wired or wireless network. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device.

As shown in FIGURE 3, the mobile device 300 includes an antenna 302, a radio frequency (RF) transceiver 304, transmit (TX) processing circuitry 306, a microphone 308, receive (RX) processing circuitry 310, and a speaker 312. The mobile device 300 also includes a main processor 314, a camera 316, one or more physical controls 318, a display 320, and a memory 322.

The RF transceiver 304 receives, from the antenna 302, an incoming RF signal, such as a cellular, WiFi, or BLUETOOTH signal. The RF transceiver 304 down-converts the incoming RF signal to generate an intermediate frequency (IF) or baseband signal. The IF or baseband signal is sent to the RX processing circuitry 310, which generates a processed baseband signal by filtering, decoding, and/or digitizing the baseband or IF signal. The RX processing circuitry 310 can transmit the processed baseband signal to the speaker 312 or to the main processor 314 for further processing.

The TX processing circuitry 306 receives analog or digital data from the microphone 308 or other outgoing baseband data from the main processor 314. The TX processing circuitry 306 encodes, multiplexes, and/or digitizes the outgoing baseband data to generate a processed baseband or IF signal. The RF transceiver 304 receives the outgoing processed baseband or IF signal from the TX processing circuitry 306 and up-converts the baseband or IF signal to an RF signal that is transmitted via the antenna 302.

The main processor 314 can include one or more processors or other processing devices and execute an operating system, applications, or other logic stored in the memory 322 in order to control the overall operation of the mobile device 300. For example, the main processor 314 could control the transmission and reception of signals by the RF transceiver 304, the RX processing circuitry 310, and the TX processing circuitry 306 in accordance with well-known principles. In some embodiments, the main processor 314 includes at least one microprocessor or microcontroller, although other types of processing devices could also be used.

The main processor 314 is also capable of executing other processes and applications resident in the memory 322. The main processor 314 can move data into or out of the memory 322 as required by an executing application. The main processor 314 is also coupled to the camera 316, which provides data to the main processor 314 for the generation of digital images or video streams. The images or video streams can be presented to a user via the display 320.

The main processor 314 is also coupled to the physical controls 318 and the display 320. A user of the mobile device 300 can use the physical controls 318 to invoke certain functions, such as powering on or powering off the device 300 or controlling a volume of the device 300. The display 320 may be a liquid crystal display (LCD), light emitting diode (LED) display, or other display capable of rendering text and graphics. If the display 320 denotes a touchscreen capable of receiving input, fewer or no physical controls 318 may be needed.

The memory 322 is coupled to the main processor 314. Part of the memory 322 could include a random access memory, and another part of the memory 322 could include a Flash memory or other read-only memory. Each memory 322 includes any suitable structure for storing and facilitating retrieval of information.

As noted above, a computing device 200 or a mobile device 300 can be used to collect various information about one or more users' interactions with one or more resources. For example, during an onboarding period when a user is known to be authenticated or authorized, information about the user's interactions can be collected by the processor 202 or 314 of the user's own device or by another device. The collected information can be analyzed by the processor 202 or 314 of the user's own device or by another device to generate one or more profiles of typical user interactions. During subsequent user sessions, addition user interaction data can be collected by the processor 202 or 314 of the user's own device or by another device, and the information could be compared to one or more profiles by the processor 202 or 314 of the user's own device or by another device. Based on this comparison, a determination can be made whether any unexpected patterns have been identified that may suggest a user account has been compromised.

Any suitable information identifying how a user interacts with a computing or networking resource could be used to generate a user profile or compared to a user profile. For example, mouse button interactions could identify the numbers of left, right, middle, and double clicks made by a user using a mouse, trackpad, or other pointing device, as well as scroll wheel usage or other scrolling behavior by the user. Mouse movement characteristics could identify distance traveled using a mouse, trackpad, or other pointing device during a given time period, cursor movements (such as where in a display screen a cursor tends to be positioned), mouse/cursor movement speed, or mouse/cursor overshoot characteristics (such as how far past an intended target the cursor travels before moving back to the intended target). Typing characteristics could include a user's speed of typing using a keyboard, frequencies of key selections (frequencies of selecting different keys) on a keyboard, or use of alternative keys on a keyboard to perform a common function (such as the user's use of the backspace button versus the user's use of the delete button to delete text). When a user device or resource includes a touchscreen, touchscreen characteristics could include whether the user actually uses the touchscreen (versus using traditional I/O devices such as keyboard and mouse) or motion tendencies and characteristics of interfacing with the touchscreen.

Operation sequence characteristics could identify a sequence of resources used by a user, the order of the resources' use, and how specific operations are conducted. As examples, for each resource, data could identify how an application or other resource was launched or accessed, how operations involving each resource were initiated (such as by using keyboard shortcuts or graphical user interface menus), or whether operations were initiated using desktop shortcuts or macros. Users can interact with an application or other resource in different ways. As a particular example, people often default to using the same mechanism for copying text, typically either using keyboard shortcuts (CTRL + C and CTRL + V in WINDOWS) or using menus to select copy followed by paste.

Other data can include the duration of a user session or a duration of a user's interactions with each application or other resource, mouse/cursor movements within a specific application or other resource, or resource-specific interactions identifying how users interact with applications or other resource (such as copying a link versus dragging a shortcut into an execution window versus using a viewing history). For browsing sessions when a user is using a web browser, the data can include the sites visited or other data about typical web-viewing habits.

Additional information about a user's typical interactions when interacting with a resource could also be used, such as the time of day or the user's geolocation when operating remotely from the resource. When physical security measures are associated with a resource, information can also be collected related to the physical security measures, such as whether the user used a physical token or other multi-factor authentication solution for a session or whether video verification was used to identify the user.

Note that these are examples of the types of metadata that could be collected, analyzed, and either used to generate one or more profiles or compared to one or more profiles. However, any other or additional data could also be used here. In general, any data that is indicative of how one or more users typically interact with one or more resources in a computing or networking environment could be collected, analyzed, and either used to generate one or more profiles or compared to one or more profiles. Also, in general, any suitable device(s) could be used to collect and process this data.

As noted above, a computing device 200 or a mobile device 300 could be used to process collected data and generate one or more user profiles. For example, the processor 202 or 314 could analyze the collected data to generate one or more profiles of typical user interactions with one or more resources. Once one or more profiles are created with a suitable level of confidence (such as for each user characteristic being monitored), data collected during a subsequent user session can be compared to the profile characteristics. If a significant-enough difference is detected, this could be indicative of an invalid user session (even if the user session was initiated using valid user credentials). When a determination is made that a potentially invalid user session has been detected, a flag could be raised, an action could be taken against the user session (such as terminating or restricting the user session or asking the user for additional authentication or verification), or other suitable functions could occur. This enables an organization to review individual user sessions that are flagged as having unusual user characteristics so that the organization can potentially mitigate user account compromise early before a profound breach occurs. Note that the data related to user interactions could be combined with other data, such as additional identifying information, to enable more insight into user session validity as well as to make logs more verbose for incident response analysis.

Although FIGURES 2 and 3 illustrate examples of devices 200 and 300 for post-authentication user verification based on user interactions, various changes may be made to FIGURES 2 and 3. For example, various components in each figure could be combined, further subdivided, or omitted and additional components could be added according to particular needs. As a particular example, each processor 202 or 314 could be divided into multiple processors, such as one or more central processing units (CPUs) and one or more graphics processing units (GPUs). Also, computing and mobile devices come in a wide variety of configurations, and FIGURES 2 and 3 do not limit this disclosure to any particular computing device or mobile device.

FIGURES 4 through 6 illustrate example types of user interaction data that could be collected and evaluated for post-authentication user verification according to this disclosure. As shown in FIGURE 4, various mouse statistics 400 can be collected for a user in a given time period. In this example, the mouse statistics 400 include numbers of left clicks, right clicks, middle clicks, and double clicks. The mouse statistics 400 also include distance traveled by a mouse or other pointer and scroll wheel usage. The mouse statistics 400 further include a measure of the amount of time that the mouse or other pointing device is used, as well as average usage per hour. The data in the mouse statistics 400 can be used to build one or more user profiles or to identify when a user session varies from the user's expected usage of a mouse or other pointing device as defined in one or more user profiles. Of course, any other or additional information about usage of a mouse or other pointing device could be used. Note that while shown within a text window here, the mouse statistics 400 need not be displayed and could simply be generated and used to build at least one user interaction profile or compared to at least one user interaction profile.

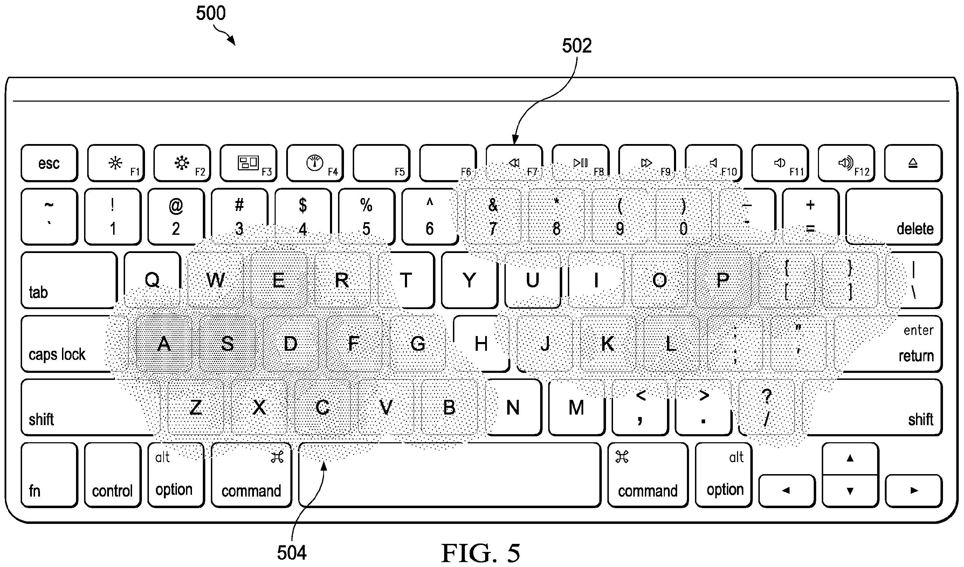

As shown in FIGURE 5, keyboard statistics 500 can be collected for a user in a given time period. In this example, the keyboard statistics 500 identify usage of various keys 502 on a keyboard. The usage is illustrated in terms of a heat map 504, where different colors or other indicators are used to identify relative usage of the keys 502. In some cases, when using a resource (such as an application), a user may use various keys 502 of the keyboard more frequently than other keys, less frequently than other keys, or not at all. The data in the heat map 504 can be used to build one or more user profiles or to identify when a user session varies from the user's expected usage of a keyboard as defined in one or more user profiles. Of course, any other or additional information about usage of a keyboard could be used. Note that while shown using a heat map here, the keyboard statistics 500 need not be expressed in terms of a heat map and could simply be generated and used to build at least one user interaction profile or compared to at least one user interaction profile.

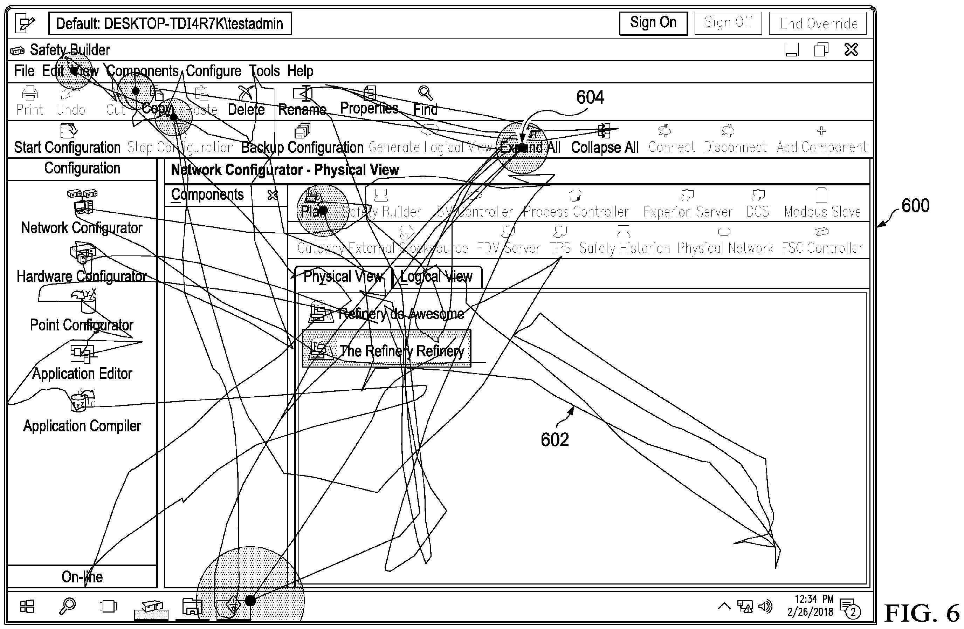

As shown in FIGURE 6, mouse usage statistics 600 can be collected for a user in a given time period. In this example, the mouse usage statistics 600 identify paths 602 taken by a mouse cursor or other pointer on the user's display screen and dwell areas 604 where the cursor tended to hover. The size of the dwell areas 604 could denote how long the user tended to hover the cursor in certain areas. The data in the mouse usage statistics 600 can be used to build one or more user profiles or to identify when a user session varies from the user's expected usage of a mouse or other pointing device as defined in one or more user profiles. Of course, any other or additional information about usage of a mouse or other pointing device could be used. Note that while shown as a map with paths 602 and dwell areas 604, the mouse usage statistics 600 need not be expressed in terms of a map and dwell areas and could simply be generated and used to build at least one user interaction profile or compared to at least one user interaction profile.

Although FIGURES 4 through 6 illustrate examples of types of user interaction data that could be collected and evaluated for post-authentication user verification, various changes may be made to FIGURES 4 through 6. For example, the specific values and other data shown in FIGURES 4 through 6 are for illustration only. Also, the information represented in FIGURES 4 through 6 is indicative of some of the types of information that could be collected, used to generate profiles of user interactions, and compared to profiles of user interactions. The same process can be used to collect information during onboarding of user data and to collect information during subsequent user sessions being analyzed. Of course, any other or additional types of information could be collected and used, including any of the information discussed above.

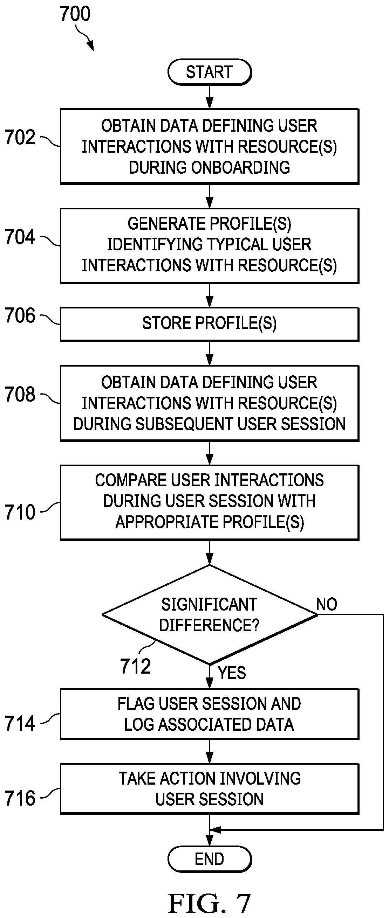

FIGURE 7 illustrates an example method 700 for post-authentication user verification based on user interactions according to this disclosure. For ease of explanation, the method 700 is described as involving the use of one or more of the devices 200 and 300 in FIGURES 2 and 3, such as within the system 100 of FIGURE 1. However, the method 700 could be used with any suitable device(s) and in any suitable system(s).

As shown in FIGURE 7, data defining user interactions with one or more resources during an onboarding period is obtained at step 702. This could include, for example, the processor 202 or 314 of the user's own device or another device obtaining information defining the user's interactions involving a keyboard, mouse, touchscreen, or other input device. This could also include the processor 202 or 314 of the user's own device or another device obtaining information defining a sequence of resources used by a user and information about how those resources were used. This could further include the processor 202 or 314 of the user's own device or another device obtaining data about the user's session, physical security measures, or any other information associated with the user. Note that this information could be obtained during a single user session or during multiple user sessions when the user is known to be a valid authenticated or authorized user.

One or more user interaction profiles identifying typical user interactions with the one or more resources are generated at step 704. This could include, for example, the processor 202 or 314 of the user's own device or another device generating a single profile or multiple profiles, such as profiles subdivided by resource, interaction type, or other characteristic(s). This could also include the processor 202 or 314 of the user's own device or another device using data associated with multiple users to generate one or more profiles, such as one or more profiles associated with a user type or user role. A profile could identify an average number of each acceptable or expected interaction or interaction type, a range of values for each acceptable or expected interaction or interaction type, or any other data defining acceptable or expected user interactions.

The one or more user interaction profiles are stored at step 706. This could include, for example, the processor 202 or 314 of the user's own device or another device storing the one or more profiles in a memory 210, 322, persistent storage 212, database, or other memory device.

Data defining user interactions with one or more resources during a subsequent user session is obtained at step 708. This could include, for example, the processor 202 or 314 of the user's own device or another device obtaining the same type(s) of information previously obtained during step 702. However, during the subsequent user session, it is not a certainty that the user who provided login credentials during the subsequent user session is a valid user.

The user interactions during the subsequent user session are compared with one or more appropriate profiles at step 710. This could include, for example, the processor 202 or 314 of the user's own device or another device calculating the same type of values determined during step 704. Example values could include an average number of each interaction or interaction type, a range of values for each interaction or interaction type, or other data defining actual user interactions during the subsequent user session.

A determination is made whether the user interactions during the subsequent user session are significantly different from the one or more profiles at step 712. This could include, for example, the processor 202 or 314 of the user's own device or another device determining whether the difference between the actual user interactions during the subsequent user session and the data in the profile(s) defining acceptable or expected user interactions is within a threshold amount or a threshold percentage. This could also include the processor 202 or 314 of the user's own device or another device determining whether the actual user interactions during the subsequent user session are within defined ranges in the profile(s). If no significant difference is detected, this is indicative that the actual user interactions during the subsequent user session are consistent with acceptable or expected user interactions, so no problem may be detected.

If at least one significant difference is detected, this is indicative that the actual user interactions during the subsequent user session are not consistent with acceptable or expected user interactions, so a problem may exist. In this case, any suitable corrective action could occur. For instance, the user session could be flagged and data associated with the user session could be logged at step 714. This could include, for example, the processor 202 or 314 of the user's own device or another device flagging the user session as problematic and reporting the flagged user session to an administrator or other personnel for examination. This could also include the processor 202 or 314 of the user's own device or another device storing information about the user session, such as any of the data collected in step 708 or any additional information that can be obtained. Moreover, one or more actions involving the user session could be taken at step 716. Any suitable action or actions, such as those described above, could be performed here. Example actions include monitoring the user's actions that occur during the user session, restricting what the user is allowed to do during the user session, or terminating the user session. Example actions also include generating a notification for a system administrator or other personnel. Example actions further include requesting additional authentication or verification from the user during the user session, such as by asking the user for additional credentials not previously provided during the session, asking the user one or more questions and verifying the answer(s), or asking the user to provide a physical security token or other multi-factor authentication solution.

Although FIGURE 7 illustrates one example of a method 700 for post-authentication user verification based on user interactions, various changes may be made to FIGURE 7. For example, while shown as a series of steps, various steps in FIGURE 7 could overlap, occur in parallel, occur in a different order, or occur any number of times. Also, any suitable type(s) of user interactions can be recorded and used for post-authentication user verification. In addition, the various operations shown in FIGURE 7 could be performed using a single device or a combination of devices as needed or desired.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
obtaining (702) first data identifying first user interactions with one or more computing or networking resources during at least one first user session that is known to be valid;
generating (704) one or more profiles defining typical user interactions with the one or more computing or networking resources based on the first data;
obtaining (708) second data identifying second user interactions with at least one of the one or more computing or networking resources during a subsequent second user session;
determining (712) whether the second user session is valid based on the second data and at least one of the one or more profiles by comparing the second user interactions to the typical user interactions defined in the at least one profile; and
taking (714, 716) one or more actions in response to determining that the second user session is not valid.

2. The method of Claim 1, wherein each of the first and second data identifies at least one of: a user's typing speed when using a keyboard, the user's frequencies of selecting different keys (502) on the keyboard, and the user's use of alternative keys on the keyboard to perform a common function.

3. The method of Claim 1, wherein each of the first and second data identifies at least one of: a number of clicks a user makes using at least one button of a mouse or trackpad, a scrolling behavior of the user using the mouse or trackpad, a distance traveled by the user using the mouse or trackpad, cursor movements made by the user using the mouse or trackpad, a movement speed of the mouse or cursor, and an overshoot of the cursor.

4. The method of Claim 1, wherein each of the first and second data identifies at least one of: multiple resources in a sequence of resources, an order in which the resources are used in the sequence, and how operations are conducted using each of the resources.

5. The method of Claim 1, wherein each of the first and second data identifies at least one of: how each resource is launched or accessed, how operations involving each resource were initiated, a duration of user interactions with each resource, mouse or trackpad movements associated with each resource, and an identification of websites visited.

6. The method of Claim 1, wherein each of the first and second data identifies at least one of: a time of day of the associated session, a location of a remote user for the associated session, how a touchscreen is used, and physical security for the associated session.

7. The method of Claim 1, wherein the one or more actions comprise at least one of:
flagging the second user session;
collecting and logging information about the second user session;
monitoring actions that occur during the second user session;
generating an alarm or other notification associated with the second user session;
restricting what a user is allowed to do during the second user session;
terminating the second user session;
requesting additional credentials from the user during the second user session;
interacting with the user during the second user session to verify the user's identity; and
requesting that the user use multi-factor authentication during the second user session to verify the user's identity.

8. An apparatus comprising:
at least one memory (204, 210, 212) configured to store:
first data identifying first user interactions with one or more computing or networking resources during at least one first user session that is known to be valid; and
second data identifying second user interactions with at least one of the one or more computing or networking resources during a subsequent second user session; and
at least one processing device (202) configured to:
generate one or more profiles defining typical user interactions with the one or more computing or networking resources based on the first data;
determine whether the second user session is valid based on the second data and at least one of the one or more profiles by comparing the second user interactions to the typical user interactions defined in the at least one profile; and
initiate one or more actions in response to determining that the second user session is not valid.

9. The apparatus of Claim 8, wherein each of the first and second data identifies at least one of: a user's typing speed when using a keyboard, the user's frequencies of selecting different keys (502) on the keyboard, and the user's use of alternative keys on the keyboard to perform a common function.

10. The apparatus of Claim 8, wherein each of the first and second data identifies at least one of: a number of clicks a user makes using at least one button of a mouse or trackpad, a scrolling behavior of the user using the mouse or trackpad, a distance traveled by the user using the mouse or trackpad, cursor movements made by the user using the mouse or trackpad, a movement speed of the mouse or cursor, and an overshoot of the cursor.

11. The apparatus of Claim 8, wherein each of the first and second data identifies at least one of: multiple resources in a sequence of resources, an order in which the resources are used in the sequence, and how operations are conducted using each of the resources.

12. The apparatus of Claim 8, wherein each of the first and second data identifies at least one of: how each resource is launched or accessed, how operations involving each resource were initiated, a duration of user interactions with each resource, mouse or trackpad movements associated with each resource, and an identification of websites visited.

13. The apparatus of Claim 8, wherein each of the first and second data identifies at least one of: a time of day of the associated session, a location of a remote user for the associated session, how a touchscreen is used, and physical security for the associated session.

14. The apparatus of Claim 8, wherein the one or more actions comprise:
flagging the second user session;
collecting and logging information about the second user session;
monitoring actions that occur during the second user session;
generating an alarm or other notification associated with the second user session;
restricting what a user is allowed to do during the second user session;
terminating the second user session;
requesting additional credentials from the user during the second user session;
interacting with the user during the second user session to verify the user's identity; and
requesting that the user use multi-factor authentication during the second user session to verify the user's identity.

15. A non-transitory computer readable medium containing instructions that when executed cause at least one processor to perform the method of any of Claims 1-7.
